(19) Europäisches Patentamt

European Patent Office

Office européen des brevets

(11) **EP 4 775 930 A1**

(12) **EUROPEAN PATENT APPLICATION**
published in accordance with Art. 153(4) EPC

(43) Date of publication:
**15.07.2026 Bulletin 2026/29**

(21) Application number: **23951204.9**

(22) Date of filing: **08.09.2023**

(51) International Patent Classification (IPC):
**G01C 21/32** (2006.01)    **G01S 17/89** (2020.01)

(52) Cooperative Patent Classification (CPC):
**G01C 21/32;** G01S 17/89

(86) International application number:
**PCT/CN2023/117743**

(87) International publication number:
**WO 2025/050384 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **KUKA Robotics Guangdong Co., Ltd.**
  **Foshan, Guangdong 528300 (CN)**
• **GD Midea Air-Conditioning Equipment Co., Ltd.**
  **Foshan, Guangdong 528311 (CN)**
• **Midea Group Co., Ltd.**
  **Foshan, Guangdong 528311 (CN)**

(72) Inventors:
• **YANG, Fan**
  **Foshan, Guangdong 528300 (CN)**
• **JIAO, Xiaoliang**
  **Foshan, Guangdong 528300 (CN)**
• **XI, Wei**
  **Foshan, Guangdong 528300 (CN)**
• **CHEN, Ming**
  **Foshan, Guangdong 528300 (CN)**

(74) Representative: **Studio Torta S.p.A.**
**Via Viotti, 9**
**10121 Torino (IT)**

(54) **MAP UPDATING METHOD AND APPARATUS, AND AUTONOMOUS MOVING APPARATUS AND STORAGE MEDIUM**

(57)    A map updating method and apparatus, and an autonomous moving apparatus and a storage medium, which relate to the technical field of autonomous navigation. The method comprises: acquiring a pre-constructed global map, a semantic map, the pose of an autonomous moving apparatus, and sensor data, wherein a static region and a dynamic region in the global map are labeled in the semantic map (S110); on the basis of the pose and the sensor data, periodically constructing a local map, so as to define the coverage range of the local map (S120), aligning the global map with the local map, so as to obtain a target local map aligned with the global map (S130), and on the basis of the global map, the semantic map and the target local map, updating the global map (S140). The consistency of a global map can be ensured, the quality of the global map is improved, and the efficiency and accuracy of a map are improved.

| |
|---|
| Acquire a pre-constructed global map, a semantic map, a pose of the autonomous mobile apparatus, and sensor data, where at least one static region and at least one dynamic region in the global map are labeled in the semantic map — S110 |
| Periodically construct a local map according to the pose of the autonomous mobile apparatus and the sensor data so as to limit the coverage range of the local map — S120 |
| Align the global map with the local map to obtain a target local map aligned with the global map — S130 |
| Update the global map according to the global map, the semantic map and the target local map — S140 |

**FIG. 3**

EP 4 775 930 A1

## Description

## TECHNICAL FIELD

Embodiments of the present application relate to the technical field of autonomous navigation, and in particular to a map updating method and apparatus, an autonomous mobile apparatus and a storage medium.

## BACKGROUND

A simultaneous localization and mapping (SLAM) technology is one of the key technologies to achieve autonomous navigation of an autonomous mobile apparatus, aiming at solving the problems of localization and mapping. SLAM is a technology that enables a mobile device equipped with a specific sensor (such as a LIDAR, an inertial measurement unit and a camera) to establish an environmental model in the movement process without prior environmental information and estimate the own position, posture, trajectory and other statuses. A model for describing the environment is a map, which can be divided into a metric map and a topological map. The metric map, such as a grid map, a point cloud map and a QR code map, emphasizes a position relationship between objects in the map, and is often used for localization and small-range route planning. The topological map emphasizes a relationship between map elements, ignores the real physical size, and is often used for large-scale route planning.

At present, one of the challenges of the autonomous navigation technology is the complex industrial scenario where the autonomous mobile apparatus works, instead of an invariable static environment, where the ubiquitous dynamic object will cause changes in the local environment. A localization system obtains the pose in the global map on the basis of matching sensor data with the global map. Therefore, when the local environment changes, the map used by the localization system is inconsistent with the actual working environment, and the localization pose reliability is reduced. According to the time cycle (scale) of the change, the environmental change can be divided into short-term instantaneous change and long-term gradual change. The short-term instantaneous change may include, but is not limited to vehicles and people moving in human-machine hybrid environments, and the short-term instantaneous change only affects the localization precision when entering the coverage range of the sensor of the autonomous mobile apparatus. The long-term gradual change may include, but is not limited to shelf movement and layout change. Different from the short-term instantaneous change, the long-term gradual change usually does not occur at the running time and in the coverage range of the autonomous mobile apparatus.

The related art adopts a method for periodically re-mapping the overall environment to update the global map. The statuses of the dynamic objects at the mapping time can only be updated by this method, and the dynamic objects in the environment have different change cycles. If the updating cycle is long, the dynamic object with the short change cycle may not be updated in the map in time. If the map updating cycle is shortened, the operation cost will be increased, and the normal work of other units will be affected. The mapping efficiency is too low, and it takes too long time to map within a large range. That is, the current map updating method has the problems of low map updating efficiency and poor consistency.

## SUMMARY

Embodiments of the present application provide a map updating method and apparatus, an autonomous mobile apparatus and a storage medium, so as to solve the above problems.

According to a first aspect, the embodiments of the present application provide a map updating method. The map updating method includes: acquiring a pre-constructed global map, a semantic map, a pose of the autonomous mobile apparatus, and sensor data, where at least one static region and at least one dynamic region in the global map are labeled in the semantic map; periodically constructing a local map according to the pose and the sensor data in order to limit the coverage range of the local map; aligning the global map with the local map to obtain a target local map aligned with the global map; and updating the global map according to the global map, the semantic map, and the target local map.

According to a second aspect, the embodiments of the present application provide a map updating apparatus. The map updating apparatus includes: a data acquisition module configured to acquire a pre-constructed global map, a semantic map, a pose of the autonomous mobile apparatus, and sensor data, where at least one static region and at least one dynamic region in the global map are labeled in the semantic map; a map construction module configured to periodically construct a local map according to the pose and the sensor data in order to limit the coverage range of the local map; a map alignment module configured to align the global map with the local map to obtain a target local map aligned with the global map; and a map updating module configured to update the global map according to the global map, the semantic map, and the target local map.

According to a third aspect, the embodiments of the present application provide an autonomous mobile apparatus. The autonomous mobile apparatus includes: a memory and a processor, an application program is stored in the memory, and the application program is configured to implement the method provided by the embodiments of the present application when being called by the processor.

According to a fourth aspect, the embodiments of the present application provide a computer-readable storage medium. The computer-readable storage medium stores program codes, and the program codes are configured to enable the processor to implement the method provided by the embodiments of the present application when being called by the processor.

According to the map updating method and apparatus, the autonomous mobile apparatus and the storage medium provided by the embodiments of the present application, the local map can be periodically constructed according to the pose of the autonomous mobile apparatus and the sensor data to limit the coverage range of the local map, the local map is aligned to obtain the target local map aligned with the global map, and the global map is updated according to the global map, the semantic map and the target local map, so that the global map can be updated on a small scale at each time, large-scale global updating of the global map can be avoided, the quality of the global map can be improved, and the map updating efficiency and accuracy can be improved.

## BRIEF DESCRIPTION OF THE DRAWINGS

In order to more clearly illustrate the technical solutions of the embodiments of the present application, accompanying drawings that need to be used in the description of the embodiments will be briefly described below. Obviously, the accompanying drawings in the following description are only some embodiments rather than all embodiments of the present application. All other embodiments and accompanying drawings obtained by those of ordinary skill in the art based on the embodiments of the present application without making creative efforts fall within the protection scope of the present application.

FIG. 1 is a structural block diagram of an autonomous mobile apparatus according to an embodiment of the present application;

FIG. 2 is a flowchart of a map updating method according to an embodiment of the present application;

FIG. 3 is a flowchart of a map updating method according to another embodiment of the present application;

FIG. 4 is a schematic diagram of a semantic map according to an exemplary embodiment of the present application;

FIG. 5 is a flowchart of step S120 in FIG. 3 according to an exemplary embodiment of the present application;

FIG. 6 is a schematic diagram of a pose graph according to an exemplary embodiment of the present application;

FIG. 7 is a schematic diagram of a global map according to an exemplary embodiment of the present application;

FIG. 8 is a partial flowchart of local mapping according to an exemplary embodiment of the present application;

FIG. 9 is a partial flowchart of local mapping according to another exemplary embodiment of the present application;

FIG. 10 is a partial flowchart of local mapping according to yet another exemplary embodiment of the present application;

FIG. 11 is a partial flowchart of local mapping according to still another exemplary embodiment of the present application;

FIG. 12 is a flowchart of local mapping and map alignment according to an exemplary embodiment of the present application;

FIG. 13 is a flowchart of step S140 in FIG. 3 according to an embodiment of the present application;

FIG. 14 is a schematic diagram of a global map according to another exemplary embodiment of the present application;

FIG. 15 is a schematic diagram of a global map according to yet another exemplary embodiment of the present application;

FIG. 16 is a partial flowchart of a map updating method according to yet another embodiment of the present application;

FIG. 17 is a flowchart of a map updating method according to an exemplary embodiment of the present application;

FIG. 18 is a structural block diagram of a map updating apparatus according to an embodiment of the present application; and

FIG. 19 is a structural block diagram of an autonomous mobile apparatus according to another embodiment of the present application.

## DETAILED DESCRIPTION OF THE EMBODIMENTS

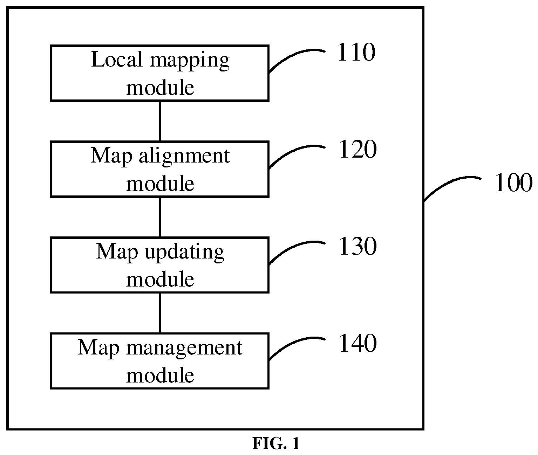

FIG. 1 is a structural block diagram of an autonomous mobile apparatus according to an embodiment of the present application. An autonomous mobile apparatus 100 may include, but is not limited to an autonomous mobile robot (AMR) or an automated guided vehicle (AGV). The autonomous mobile apparatus 100 may include a local mapping module 110, a map alignment module 120, a map updating module 130 and a map management module 140.

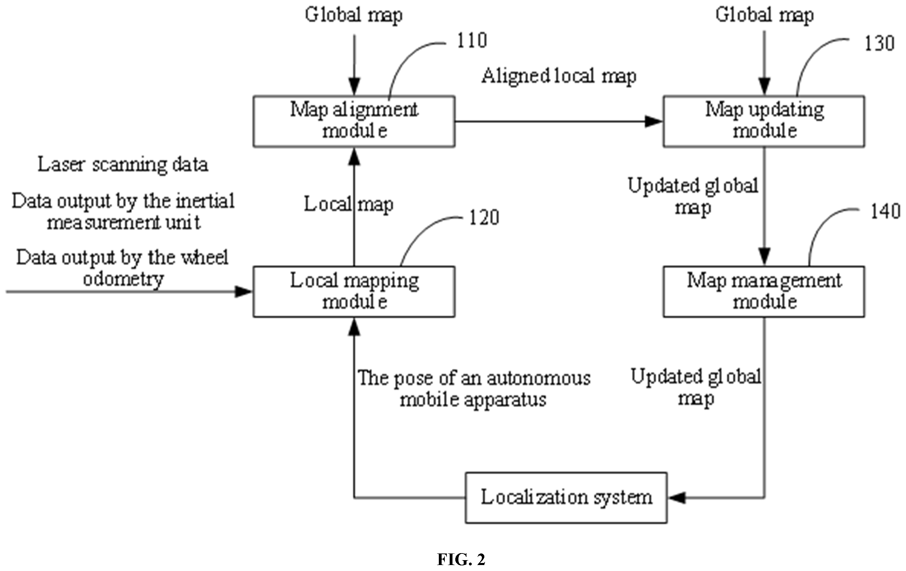

As shown in FIG. 2, FIG. 2 is a flowchart of a map updating method according to an embodiment of the present application. The local mapping module 110 is configured to construct a local map according to data output by a LIDAR, an inertial measurement unit (IMU), a wheel odometry and a camera as well as a pose output by a localization system of the autonomous mobile apparatus 100. The local mapping module 110 may send the local map to the map alignment module 120 through the communication of a second generation robot operating system (ROS) or remote procedure call (RPC), where RPC may be Google remote procedure call (gRPC). The map alignment module 120 is configured to align the local map with the global map. The map updating module 130 is configured to update the global map according to the local map aligned with the global map. The map management module 140 is configured to manage the historical global map and the updated global map, and output the updated global map to the localization system of the vehicle, so that the localization system can localize the pose of the autonomous mobile apparatus 100 according to the updated global map.

In the embodiments of the present application, the local mapping module 110 is configured to perform step S110 to step S120 below. The map alignment module 120 is configured to perform step S130 below. The map updating module is configured to perform step S140 below. The map management module 140 is configured to perform step 210 to step S230 below.

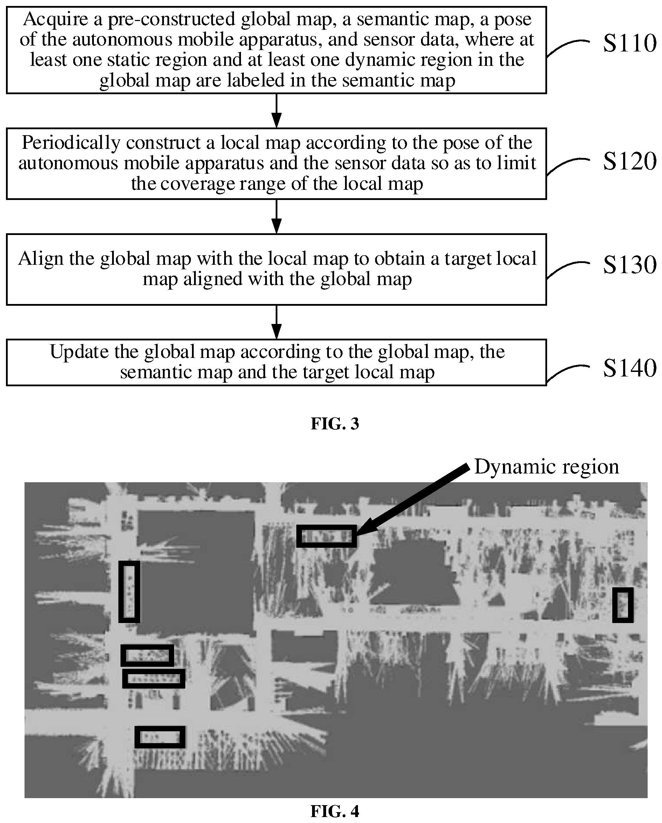

FIG. 3 is a flowchart of a map updating method according to another embodiment of the present application. The map updating method may be applied to the autonomous mobile apparatus or the map updating apparatus. The map updating method may include step S110 to step S140 below.

Step S110: a pre-constructed global map, a semantic map, a pose of an autonomous mobile apparatus, and sensor data are acquired, and at least one static region and at least one dynamic region in the global map are labeled in the semantic map.

Usually, before the autonomous mobile apparatus works, for an actual working scenario of the autonomous mobile apparatus, the actual working scenario is comprehensively mapped by an SLAM method to obtain the global map, thereby facilitating the subsequent autonomous navigation according to the global map. The global map may include an obstacle in the actual working scenario during SLAM, such as a wall, a corridor and a shelf.

In the embodiments of the present application, the semantic map labels the at least one static region and the at least one dynamic region in the global map, each of the at least one dynamic region refers to a region where at least one dynamic object with a low change cycle (such as a shelf and a tray) exists, and each of the at least one static region includes at least one static map element (such as a corridor, a wall and a concrete column) with an obvious feature in the global map. For example, referring to the semantic map shown in FIG. 4, regions in bold rectangular boxes indicated by the arrow are the dynamic regions.

To ensure that the dynamic object with the low change cycle can be detected as much as possible to filter out a mobile object in the map as well as ensure that the key feature in the map is complete to improve the map updating accuracy, in the embodiments of the present application, at least two dynamic region determining methods are used to determine at least two initial dynamic regions from the global map, and each dynamic region determining method corresponds to one initial dynamic region; each of at least one intersection of the at least two initial dynamic regions is calculated as a dynamic region; and the semantic map is constructed according to the at least one dynamic region. The at least two dynamic region determining methods may include, but are not limited to, a manual labeling method, a static obstacle filtering method, a map database analysis method, a map likelihood difference method and the like.

The method for determining the initial dynamic region by the manual labeling method is as follows: the global map is output, so that relevant personnel can manually label the at least one dynamic region in the global map; and a region manually labeled for the global map is acquired as the initial dynamic region.

The method for determining the initial dynamic region by the static obstacle filtering method is as follows: the global map is output, so that relevant personnel can process the global map, and only at least one stable and unchanged obstacle (such as a corridor, a wall and a concrete column) in the actual working scenario of the autonomous mobile apparatus is retained, other regions that may change are erased, for example, the relevant personnel can determine the at least one static region in the global map according to an architectural drawing of the actual working scenario of the autonomous mobile apparatus, and can determine a region where shelf movement occurs according to the task planning of the autonomous mobile apparatus, so that the global map only including the at least one stable and unchanged obstacle can be used as a filter to filter the at least one stable and unchanged obstacle in the global map; a manually processed global map is acquired; and a region in the global map except the at least one stable and unchanged obstacle is determined as the initial dynamic region.

The method for determining the initial dynamic region by the map database analysis method is as follows: a plurality of historical global maps are acquired from a map database; and for the same grid in a plurality of historical global maps, a change curve of the grid is generated, the change curve of the grid is modeled by a hidden Markov model (HMM), the curvature of the change curve is calculated, and a region corresponding to the grid with the curvature greater than a specified curvature is determined as the initial dynamic region. The specified curvature may be determined according to the actual requirement on accuracy and the actual working scenario of the autonomous mobile apparatus, which is not specifically limited here. Usually, the greater the specified curvature, the greater the change degree of the environment of the region corresponding to the grid.

The method for determining the initial dynamic region by the map likelihood difference method is as follows: the likelihood value of the same grid in the local map and the global map is calculated by a likelihood algorithm; and a region corresponding to the grid with the likelihood value greater than a specified likelihood value is determined as the initial dynamic region. The specified likelihood value may be determined according to the actual requirement on accuracy and the actual working scenario of the autonomous mobile apparatus, which is not specifically limited here. Usually, the greater the specified likelihood value, the greater the change degree of the environment of the region corresponding to the grid.

In the embodiments of the present application, a pose of the autonomous mobile apparatus may be a pose output by a LIDAR odometry or a pose output by a localization system. The LIDAR odometry is continuously constructed by using data output by the LIDAR, the inertial measurement unit, the wheel odometry and the camera and by a filtering method. The filtering method may adopt an existing filtering method, which is not limited here. The pose output by the LIDAR odometry is calculated according to the data output by the LIDAR, the inertial measurement unit, the wheel odometry and the camera, and there is a certain accumulated error, which will get bigger and bigger with the accumulation of time.

A sensor for perceiving ambient environment information of the autonomous mobile apparatus is mounted on the autonomous mobile apparatus, data detected by the sensor is referred to as sensor data, and the specific content of the sensor data is determined according to the sensor actually mounted on the autonomous mobile apparatus. In the embodiments of the present application, the sensor data at least includes laser scanning data.

Step S120: a local map is periodically constructed according to the pose of the autonomous mobile apparatus and the sensor data so as to limit the coverage range of the local map.

In the moving process of the autonomous mobile apparatus, a pose graph can be constructed based on the pose output by the LIDAR odometry and the sensor data, and a local map can be periodically constructed and published according to the pose graph when a preset condition of periodically publishing the local map is met. In the embodiments of the present application, the coverage range of the periodically published local map is limited by constructing the local map based on the pose graph and limiting the quantity of the nodes of the pose graph, so that the accumulated error is reduced and the map updating accuracy is improved.

Specifically, in the moving process of the autonomous mobile apparatus, the local map will be constructed and published once as long as the condition of periodically publishing the local map is met. In the embodiments of the present application, the step of publishing the local map and the previous steps form a method for constructing one round of local map, and then the method for constructing one round of local map is described.

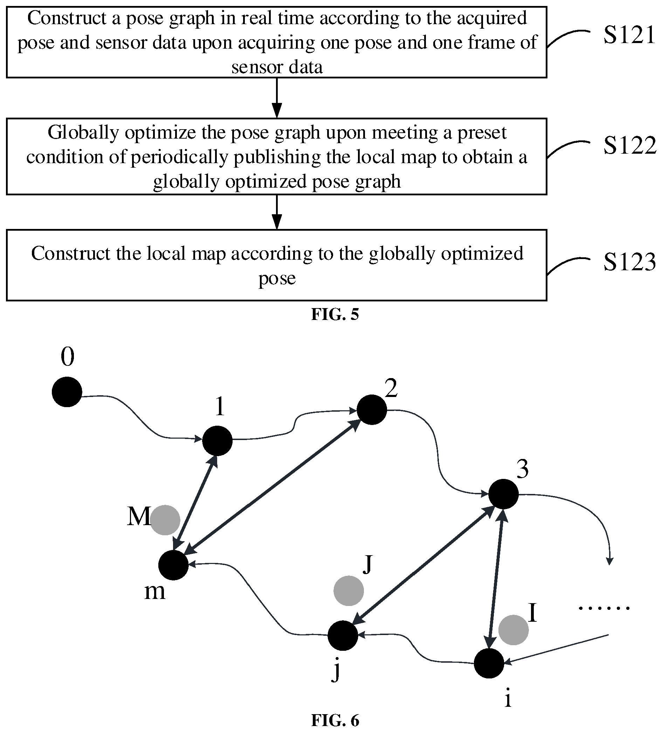

Referring to FIG. 5, the method for constructing one round of local map in step S120 may include step S121 to step S123.

Step S121: a pose graph is constructed in real time according to the acquired pose and sensor data upon acquiring one pose and one frame of sensor data.

For each pose, a motion filtering method can be used to detect whether the current pose meets the preset condition. Specifically, whether the current pose meets the preset condition can be determined according to the relative movement between the current moment and the previous moment. For example, the pose at the previous moment can be acquired, and a distance difference and an angle difference between the current pose and the pose at the previous moment can be calculated. Whether the distance difference between the current pose and the pose at the previous moment is greater than a preset distance is determined. Whether the angle difference between the current pose and the pose at the previous moment is greater than a preset angle difference is determined. If the distance difference is greater than the preset distance or the angle difference is greater than the preset angle difference, it is determined that the current pose meets the preset condition. If the distance difference is less than or equal to the preset distance or the angle difference is less than or equal to the preset angle difference, it is determined that the current pose does not meet the preset condition. If the current pose meets the preset condition, the current pose as a node is added to the pose graph. When the pose as the node is added to the pose graph, one frame of laser scanning data acquired at the same moment as the pose will be added to the node corresponding to the pose, and the pose acquired at the same moment (that is, the node in the pose graph) and the laser scanning data have a corresponding relationship. If the current pose does not meet the preset condition, the current pose is skipped, and the pose graph is not constructed according to the current pose. A redundant pose in the pose can be filtered out through motion filtering to avoid the addition of a redundant node in the pose graph, thereby improving the mapping efficiency and preventing the problems of non-convergence or poor optimization effect in the subsequent pose graph optimization.

In some embodiments, for each frame of sensor data, whether the current sensor data includes preset reference object information can be detected. The preset reference object refers to a reference object which is preset and arranged in the actual working scenario of the autonomous mobile apparatus and configured to assist in map alignment and map updating, and the preset reference object does not depend on the environment and is not affected by the environmental change. The preset reference object may include, but is not limited to a QR code and a reflector. The preset reference object information may include a pose of the preset reference object. If the current sensor data includes the preset reference object information, the pose of the preset reference object as a node is added to the pose graph. The pose of the preset reference object is introduced into the pose graph, so that at least one constraint relationship between nodes in the pose graph can be increased, the mapping quality when the environment changes dramatically can be improved, and the local mapping robustness can be enhanced.

When a new node is added to the pose graph, at least one constraint relationship corresponding to the nodes can be acquired, and at least one edge of the pose graph is constructed according to the at least one constraint relationship. The constraint relationship of each node is a "calculated observation constraint" calculated by the LIDAR odometry according to the data output by the wheel odometry, the inertial measurement unit, the camera and the LIDAR. As an example, referring to FIG. 6, Points 0, 1, 2, 3,..., i, j and m are nodes in the pose graph, a single non-bold arrow represents the edge of an edge for connecting the nodes (that is, the edge of the pose graph), and each of the at least one edge of the pose graph is configured to constrain two nodes connected by the edge and is a "calculated observation constraint" output by the LIDAR odometry. As the autonomous mobile apparatus moves in the scenario, an accumulated error of the "calculated observation constraint" will become larger and larger and deviate from an "actual observation constraint" output by the LIDAR, as shown in FIG. 6, Point I is the actual pose of Point i, Point J is the actual pose of Point j, and Point M is the actual pose of Point m. To eliminate the accumulated error, when the autonomous mobile apparatus passes through the explored region, at least one constraint relationship between the current pose and some historical poses can be calculated by a loop closure module, for example, a loop closure constraint represented by bold double arrows in FIG. 6, and the current pose is corrected according to the loop closure constraint. Some poses in the pose graph have high similarity with an image frame corresponding to the current pose, and the loop closure constraint can be calculated from the pose with the image frame having high similarity. For example, if the image frame corresponding to Point 3 in FIG. 6 has high similarity with the image frame corresponding to Point i, the loop closure constraint of Point 3 and Point i can be calculated.

In the embodiments of the present application, a pose graph is constructed by a sliding window method. That is, the pose graph in the embodiments of the present application includes at least one window, and the size of each window can be measured according to the maximum quantity of the nodes that the window can include. The maximum quantity of the nodes that the window can include can be preset according to the environmental change in the actual working scenario. If the environmental change in one region is large, the maximum quantity of the nodes that the window can include is larger. If the environmental change in one region is small, the maximum quantity of the nodes that the window can include is smaller.

In some embodiments, the size of the window can be dynamically adjusted according to regional division. For example, the size of the window corresponding to each region (that is, the maximum quantity of the nodes that the window can include) can be preset according to the environmental change in each region in the actual working scenario of the autonomous mobile apparatus. During the movement of the autonomous mobile apparatus and real-time mapping, the size of the window corresponding to the current region corresponding to the current window of the autonomous mobile apparatus can be acquired, and the size of the current window can be adjusted according to the acquired size of the window, so that the size of the current window is the same as the size of the window corresponding to the current region. In this embodiment, the size of the window is adjusted dynamically in real time according to the environmental change, so that the precision and accuracy of local mapping can be improved, thereby improving the global map updating accuracy.

In some other embodiments, during the movement of the autonomous mobile apparatus and real-time mapping, the current region of the autonomous mobile apparatus can be acquired, the actual environmental change rate of the dynamic region in the global map can be calculated, and the size of the window corresponding to the current region can be adjusted dynamically in real time according to the actual environmental change rate. In this embodiment, the size of the window is adjusted dynamically in real time according to the environmental change, so that the precision and accuracy of local mapping can be improved, thereby improving the global map updating accuracy.

For each window in the pose graph, in response to the quantity of the nodes included by the current window reaches a first preset quantity, the nodes in the current window are optimized to obtain optimized nodes and form a locally optimized pose graph. The first preset quantity corresponding to each window may be different, and the first preset quantity corresponding to each window may be the maximum quantity of the nodes that the window can include. For example, when the current window is constructed, at least one constraint relationship between the nodes in the current window will be constructed to form the pose graph in the current window (the pose graph in the current window may be referred to as one batch), the actual constraint relationship between the nodes in the pose graph in the current window is an "actual observation constraint" in laser scanning data corresponding to the nodes, a "calculated observation constraint can be calculated according to the poses of the nodes in the current window, a residual between the "actual observation constraint" of each node in the current window and the "calculated observation constraint" is calculated, the residuals corresponding to all the nodes in the current window are added, and the poses of all the nodes in the current window can be obtained by a least square method when the overall residual of all the nodes in the current window is the minimum, that is, the poses of all the nodes in the current window minimizing the overall residual are the optimized poses.

To alleviate the phenomenon of map breakage caused by excessive error of odometry data, in the embodiments of the present application, for each new node in the pose graph, the nodes in the pose graph are subjected to pose correction by a scan matching method. Specifically, after the nodes in the current window are optimized, the laser scanning data corresponding to the optimized nodes can be acquired from the sensor data, and a matching map corresponding to the current window is generated according to the laser scanning data corresponding to the optimized nodes. For example, the laser scanning data included in all the nodes in the current window can be converted into a global map coordinate system according to the poses of the optimized nodes and each frame of laser scanning data included in the nodes, each beam of laser is subjected to ray tracing, the occupancy probability corresponding to the grid is calculated according to the probability that the laser hits the grid in the global map, the matching map is formed, and each grid in the matching map saves the occupancy probability of the grid. Usually, the occupancy probability of the grid hit by the laser is large, and the occupancy probability of the grid missed by the laser is small. In combination with the actual scenario, if the laser hits an obstacle, the occupancy probability of the grid corresponding to the obstacle in the global map is large.

After the nodes in the current window are optimized, a next window is constructed, a first node of the next window is the last node of the current window, and the nodes in the next window are corrected by the matching map corresponding to the current window.

Specifically, when a new node is added in the next window, the pose of the new node is corrected by the matching map corresponding to the current window. For example, for each new node in the next window, a plurality of candidate points corresponding to the current node are acquired according to a pose sampling interval in a specified region taking the current node as a center. The pose sampling interval includes a position sampling interval and an angle sampling interval, and the pose sampling interval and the specified region can be preset according to the actual requirements, which are not specifically limited here. For each candidate point of the plurality of candidate points, a matching value of each candidate point is calculated according to the following ways: laser scanning data corresponding to a current candidate point is acquired from the sensor data; a grid hit by the laser scanning data corresponding to the current candidate point in the matching map is determined as a target grid; a probability of the target grid hit by the laser scanning data corresponding to the current candidate point is calculated as a first occupancy probability; an occupancy probability saved in the target grid in the matching map is acquired as a second occupancy probability; and a difference value between the first occupancy probability and the second occupancy probability is calculated as a matching value of the current candidate point and the matching map. When the matching values corresponding to the plurality of candidate points are calculated, the candidate point with the highest matching value in the plurality of candidate points is selected to correct the current node.

Step S122: when a preset condition of periodically publishing the local map is met, the pose graph is globally optimized to obtain a globally optimized pose graph.

The condition of periodically publishing the local map may be preset according to the environment in the actual working scenario of the autonomous mobile apparatus, the moving speed of the autonomous mobile apparatus and the relative movement constraint relationship between the nodes in the pose graph (for example, the distance between two adjacent nodes is required to be greater than or equal to 50 cm).

For example, the preset condition of periodically publishing the local map may include: the quantity of the nodes in the pose graph reaches a second preset quantity, or the moving distance of the autonomous mobile apparatus reaches a preset distance, or a duration from the time of constructing the pose graph to the current moment reaches a preset duration. The second preset quantity is greater than the first preset quantity, and the second preset quantity may be set according to the size of the window. For example, the second preset quantity may be the maximum quantity of the nodes that three windows can include. The preset distance and the preset duration may be set according to the actual requirement, for example, the preset duration may be 5 minutes.

The global optimization of the pose graph refers to the optimization of all the nodes in the current pose graph. A method for globally optimizing the pose graph is similar to the method for optimizing the nodes in the window, but the only difference is that the quantities of the nodes participating in the optimization are different. For example, the "actual observation constraint" corresponding to each node in the current pose graph can be acquired, the "calculated observation constraint" of each node in the current pose graph is calculated, the residual between the "actual observation constraint" and the "calculated observation constraint" of each node in the current pose is calculated, the residuals corresponding to all the nodes in the current pose graph are added, and the poses of all the nodes in the current pose graph can be obtained by a least square method when the overall residual of all the nodes in the current pose graph is the minimum, that is, the poses of all the nodes in the current pose graph minimizing the overall residual are the optimized poses. The pose graph is globally optimized before the local map is published, so that the consistency of the map can be improved.

Step S123: the local map is constructed according to the globally optimized pose graph.

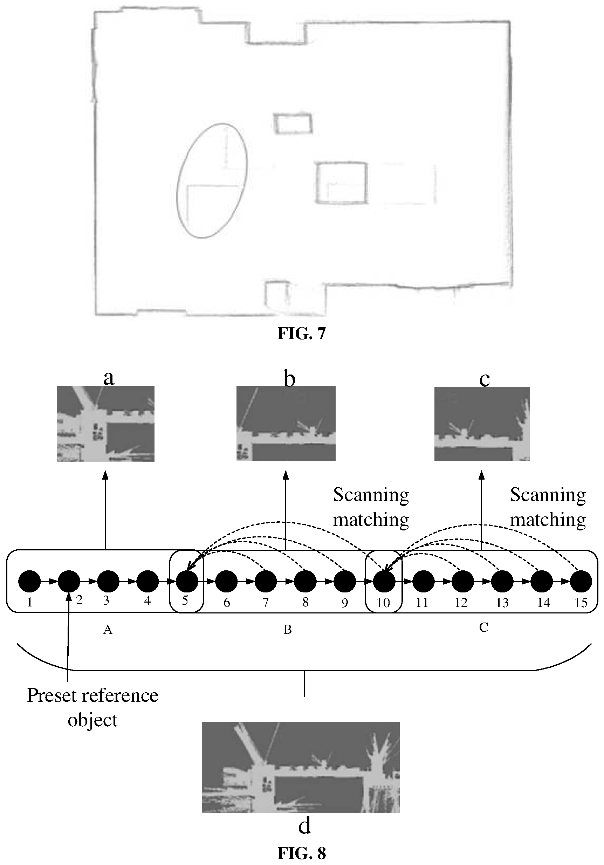

The local map with the size as same as that of the globally optimized pose graph can be constructed according to the globally optimized pose graph. For example, the laser scanning data included in all the nodes in the globally optimized pose graph can be converted into the global map coordinate system according to the poses of the nodes in the globally optimized pose graph and each frame of laser scanning data included in the nodes, each beam of laser is subjected to ray tracing, the occupancy probability corresponding to the grid is calculated according to the probability that the laser hits the grid in the global map, the matching map is formed, and each grid in the matching map saves the occupancy probability of the grid. In the embodiments of the present application, the local map is constructed according to the poses of the nodes in the globally optimized pose graph and each frame of laser scanning data included in the nodes, so that ghosts (such as a part circled in FIG. 7) generated by moving objects (such as walking people and other moving autonomous mobile apparatuses) in the actual working scenario in the local map and artifacts caused by incomplete observation can be filtered out.

After the local map is published, a specified quantity of partial nodes in the pose graph can be deleted one by one according to the time sequence of nodes added into the nodes in the pose graph in order to control the size of the pose graph and the size of a local map constructed in the next round, thereby reducing the accumulated error by controlling the coverage range of the local map. The specified quantity can be set according to the actual requirement. For example, the specified quantity may be half of the quantity of all the nodes included in the globally optimized pose graph. After the specified quantity of partial nodes are deleted, the next round of construction of the local map can be performed continuously repeatedly according to the method from step S121 to step S123 until the autonomous mobile apparatus finishes moving.

For the convenience of understanding, an example is provided here to illustrate the construction process of the local map from step S121 to step S123. Referring to FIG. 8 to FIG. 11, Points 1 to 15 are the nodes in the pose graph. The maximum quantity of the nodes that a first window A can include is 5, and Points 1 to 5 are the nodes in the first window A. The maximum quantity of the nodes that a second window B can include is 6, and Points 5 to 10 are the nodes in the second window B. The maximum quantity of the nodes that a third window C can include is 6, and Points 10 to 15 are the nodes in the third window C. Every time a pose and a frame of sensor data are acquired, the nodes in the pose graph are determined according to the pose and the sensor data.

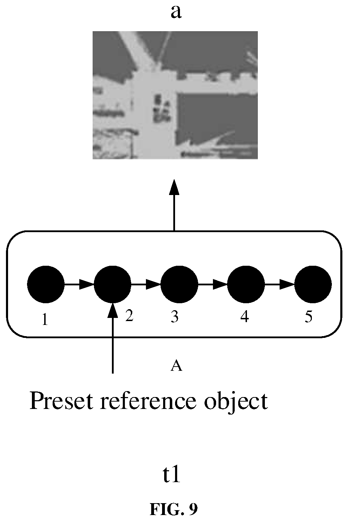

Windows A to C are constructed one by one. As shown in FIG. 9, when the quantity of the nodes included in the first window A reaches the maximum quantity 5 of the nodes that the window can include (at the moment t1), all the nodes 1 to 5 in the first window A are optimized, and a matching map a corresponding to the first window A is constructed according to the optimized nodes.

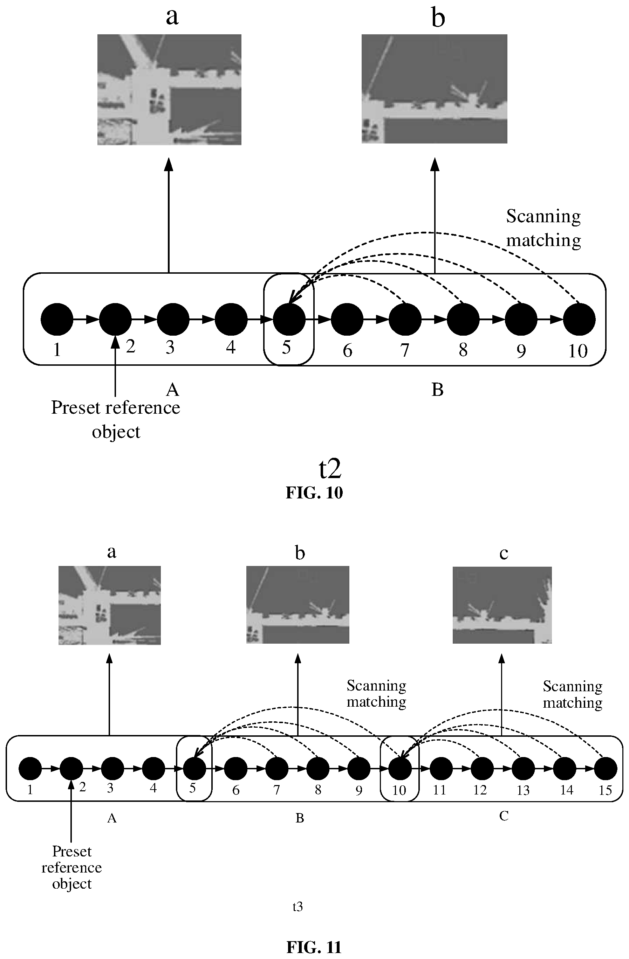

As shown in FIG. 10, the second window B is constructed at the moment t2 (t2>t1), the first node of the second window B is Point 5, and the nodes added in the second window B are subjected to pose correction by a scan matching method and according to the matching map corresponding to the first window A; and when the quantity of the nodes included in the second window B reaches the maximum quantity 6 of the nodes that the window can include, all the nodes 5 to 10 in the second window B are optimized, and a matching map b corresponding to the second window B is constructed according to the optimized nodes.

As shown in FIG. 11, the third window C is constructed at the moment t3 (t3>t2), the first node of the third window C is Point 10, and the nodes added in the third window C are subjected to pose correction by the scan matching method and according to the matching map b corresponding to the second window B; when the quantity of the nodes included in the third window C reaches the maximum quantity 6 of the nodes that the window can include, all the nodes 10 to 15 in the third window C are optimized, and a matching map c corresponding to the third window C is constructed according to the optimized nodes; meanwhile, when the quantity of the nodes included in the three windows A to C reaches the quantity 15 of the periodically published local maps, all the nodes 1 to 15 included in the three windows A to C are globally optimized to obtain the globally optimized pose graph, and a local map (a local map d shown in FIG. 8) is constructed according to the globally optimized pose graph.

In some embodiments, when the local map is published, the preset reference object information also can be published to assist the subsequent map alignment.

Step S130: the global map is aligned with the local map to obtain a target local map aligned with the global map.

Map alignment adopts an image feature point matching technology and a point cloud matching technology, and the main purpose is to calculate a spatial relationship between the local map and the global map for updating the global map. Since the local map inevitably has an accumulated error, map alignment is required to match each local map with the global map to eliminate the accumulated error to achieve the consistency of the global map; meanwhile, the global map is updated by the aligned local map accurately in real time.

After the local map is obtained, a global submap is determined in the global map according to the center and size of the local map, the center of the global submap coincides with the center of the local map, and the size of the global submap is the same as the size of the local map.

An oriented fast and rotated brief (ORB) feature of the local map is extracted as a first feature by an ORB algorithm, and an ORB feature of the global submap is extracted as a second feature. The ORB algorithm may be used to rapidly create feature vectors for key points in the local map and the global map, and these feature vectors may be used to identify objects in the local map and the global map. In the ORB algorithm, Fast is a feature detection algorithm, and Brief is a vector creation algorithm. The feature detection algorithm in the ORB algorithm is used to find key points from the local map and the global map first. The key points are small salient regions in the image, for example, an angle point or a point with the feature of a sharp change of a pixel value from light color to dark color. The vector creation algorithm in the ORB algorithm is used to calculate a corresponding feature vector for each key point to obtain the ORB feature. The feature vector created by the ORB algorithm only includes 1 and 0, and is referred to as a binary feature vector. The sequence of 1 and 0 will change according to a specific key point and a pixel region surrounding the specific key point. The feature vector represents an intensity mode surrounding the key point, so a plurality of feature vectors may be used to identify a larger region, even specific objects in the local map and the global map. The calculation speed of the ORB algorithm is very high, and is not affected by noisy point and image transformation (such as rotation and scaling transformation) to a certain extent.

After the first feature of the local map and the second feature of the global map are obtained, the global map is aligned with the local map according to the first feature and the second feature to obtain the local map aligned with the global map.

Specifically, image coordinates of the first feature in the local map are acquired to obtain first point cloud corresponding to the first feature. Image coordinates of the second feature in the global submap are acquired to obtain a second point cloud corresponding to the second feature. An initial map alignment value is determined according to the first feature, the first point cloud, the second feature and the second point cloud. For example, feature matching is performed on the first feature and the second feature by an ORB feature matching algorithm in OpenCV to obtain an initial corresponding relationship between the first feature and the second feature. At least one outlier in the initial corresponding relationship is eliminated by an algorithm for eliminating discrete points, and a transformation relationship between the first point cloud and the second point cloud is calculated to obtain at least one correct corresponding relationship between the first feature and the second feature and a transformation relationship between the first point cloud and the second point cloud. The algorithm for eliminating discrete points may include, but is not limited to a graph reliability outlier removal (GROR) algorithm, a median absolute deviation (MAD) algorithm, a standard deviation algorithm and a percentile algorithm. if the quantity of the at least one correct corresponding relationships is greater than a preset quantity, the transformation relationship between the first point cloud and the second point cloud is determined as the initial map alignment value; and if the quantity of the at least one correct corresponding relationships is less than or equal to the preset quantity, the local map is determined as the initial map alignment value. The preset quantity is set according to the scenario features (such as the complexity and the change degree of the scenario) of the actual working scenario. For example, the preset quantity may be 50.

The global map is aligned with the local map according to the initial map alignment value and by a point cloud alignment algorithm to obtain the local map aligned with the global map. The point cloud algorithm may be, but not limited to, an iterative closest point (ICP) algorithm. For example, the initial map alignment value is aligned by the point cloud alignment algorithm to obtain an alignment result and a residual. The alignment result is a transformation relationship between a local map coordinate system and a global map coordinate system, that is, a transformation relationship of the alignment between the local map and the global map. If the residual is less than a preset residual (determined according to the actual working scenario), it is determined that alignment is successful. Coordinate transformation is performed on the local map based on the alignment result to obtain the target local map aligned with the global map. If the residual is greater than or equal to the preset residual, it is determined that alignment fails, and the local map is ignored, thereby avoiding the subsequent global map updating error caused by the mismatch between the local map and the global map.

In some embodiments, if preset reference object information is received, when the initial map alignment value is aligned by the point cloud alignment algorithm, the preset reference object information can be added to assist map alignment, thereby improving the alignment accuracy.

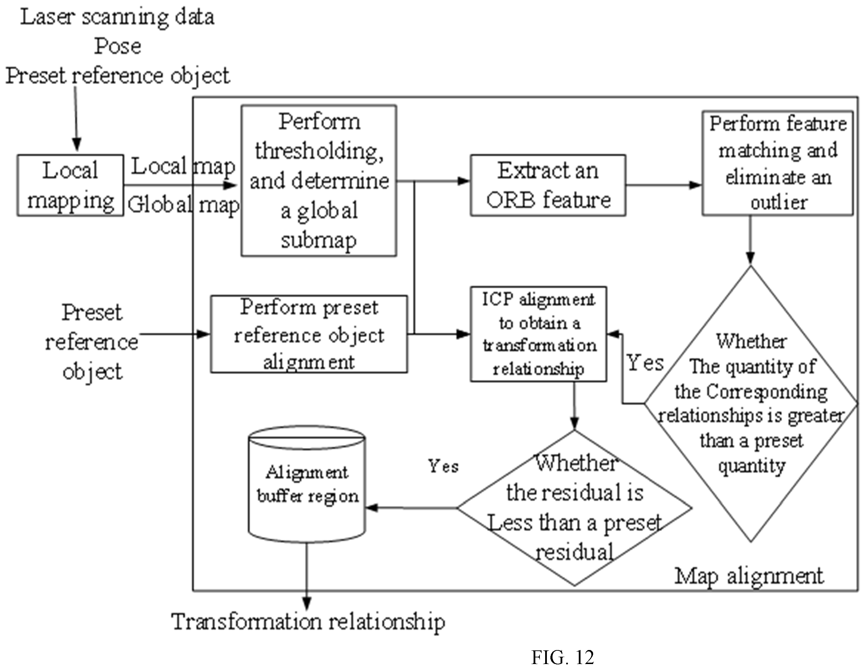

For example, referring to FIG. 12, step S130 may include the flow shown in FIG. 12. Local mapping is performed according to the laser scanning data, the pose output by the LIDAR odometry and the preset reference object information to obtain the local map; the global map and the local map are subjected to thresholding; the global submap is determined in the global map according to the local map, the ORB features of the local map and the global submap are extracted, the ORB features of the local map and the global submap are matched to obtain an initial corresponding relationship, and at least one outlier in the initial corresponding relationship is eliminated by a GROR algorithm to obtain at least one correct corresponding relationship; whether the quantity of the at least one correct corresponding relationships is greater than a preset quantity is determined; if the quantity of the at least one correct corresponding relationships is greater than the preset quantity, the point cloud of the ORB features of the local map and the global submap is used as the initial map alignment value; if the quantity of the at least one correct corresponding relationships is not greater than the preset quantity, the local map is determined as the initial map alignment value; the initial map alignment value is aligned by the ICP algorithm to obtain a transformation relationship of the alignment between the local map and the global map and a residual; whether the residual is less than a preset residual is determined; and if the residual is less than the preset residual, alignment is successful, the transformation relationship of the alignment between the local map and the global map is stored in an alignment buffer region, and the transformation relationship of the alignment between the local map and the global map is sent to a map updating module, so that the map updating module can update the global map based on the local map aligned with the global map.

Step S140: the global map is updated according to the global map, the semantic map and the target local map.

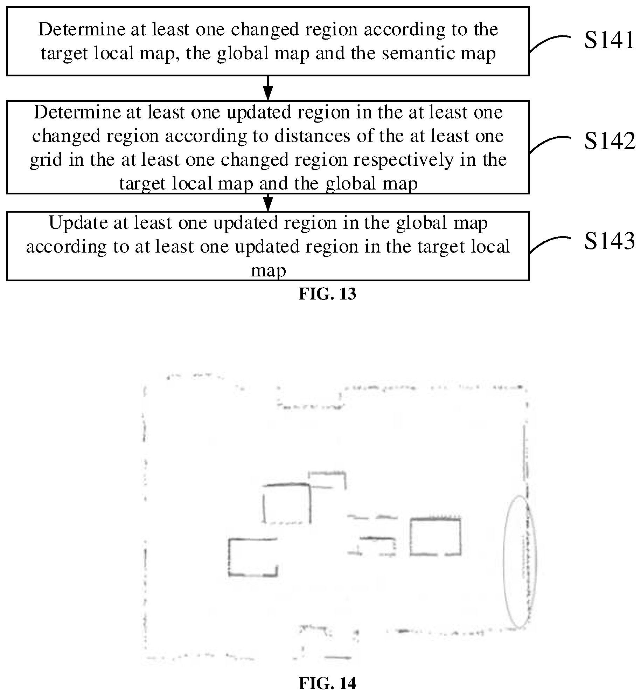

In some embodiments, referring to FIG. 13, step S140 may include step S141 to step S143.

Step S141: at least one changed region is determined according to the target local map, the global map and the semantic map.

At least one intersection of the target local map and the global map is calculated as an overlap region of the target local map and the global map. Usually, there will be overlap regions in the target local map and the global map, unless the autonomous mobile apparatus moves out of the bound relative to the global map, that is, the moving range of the autonomous mobile apparatus exceeds the coverage range of the global map. For example, the autonomous mobile apparatus passes by a door when the global map is constructed, the door is closed, and the global map does not have information about a region inside the door; and when the autonomous mobile apparatus passes by the door for the second time, the door is opened, the autonomous mobile apparatus enters the region inside the door, and there will be no overlap region between the region inside the door and the global map.

After the overlap region is determined, the at least one changed region can be determined according to the grid in the overlap region and the semantic map. For example, whether the grid in the overlap region is in the at least one static region or the at least one dynamic region labeled in the semantic map can be detected. If it is detected that the grid in the overlap region is in the at least one dynamic region labeled in the semantic map, it means that the region corresponding to the grid changes, and the grid in the overlap region in the at least one dynamic region labeled in the semantic map is determined as the at least one changed region. If it is detected that the at least one grid in the overlap region is in the at least one static region labeled in the semantic map, it means that the region corresponding to the grid will not change, the status of the corresponding grid in the global map can be maintained unchanged, and other grids in the overlap region are traversed continuously. Through semantic map filtering, the problem of poor map quality caused by long-term map updating can be effectively alleviated, a static object can be prevented from being updated repeatedly, and double images (such as a part circled in FIG. 14) can be prevented from occurring in the global map.

Step S142: at least one updated region is determined in the at least one changed region according to distances of at least one grid in the at least one changed region respectively in the target local map and the global map.

A distance from each of the at least one grid in the at least one changed region in the target local map to a closest obstacle is acquired to obtain a first distance of each of the at least one grid in the at least one changed region. For example, a distance map corresponding to the target local map can be acquired, each grid in the distance map saves a distance between the grid and a closest obstacle, and a distance from the grid in the at least one changed region to the closest obstacle in the target local map can be acquired according to the distance map.

The distance from each of the at least one grid in the change region in the global map to the closest obstacle is acquired to obtain a second distance of each of the at least one grid in the at least one changed region. For example, a distance map corresponding to the global map can be acquired, each grid in the distance map saves a distance between the grid and a closest obstacle, and a distance from the grid in the at least one changed region to the closest obstacle in the global map can be acquired according to the distance map.

The at least one updated region in the at least one changed region is determined according to the first distance and the second distance of each of the at least one grid in the at least one changed region. Specifically, for each grid in the at least one changed region, a likelihood value of the current grid changing is calculated according to the first distance and the second distance corresponding to the current grid by a likelihood algorithm, and a region corresponding to the at least one grid in the at least one changed region with the likelihood value greater than a specified likelihood value is determined as the at least one updated region. For example, the likelihood value (ranging from 0 to 1) at which each grid changes can be calculated by the following expression:

$$e^{-\frac{d_{mea}-d_{exp}}{2\sigma^2}}$$

$d_{mea}$ represents the first distance, $d_{exp}$ represents the second distance, $\sigma$ is a control parameter of a likelihood function, and the strict degree of dividing the updated region can be controlled by adjusting the parameter $\sigma$.

After the at least one updated region is determined, a moving object can be filtered out of the target local map by adjusting a distance map parameter. For example, the distance map parameter may be a threshold for comparison with the likelihood value calculated by the above expression, and a moving object corresponding to a grid in the target local map with the likelihood value greater than or equal to the distance map parameter will be filtered out.

The at least one updated region is identified by the likelihood algorithm, so that the completeness of the at least one updated region can be ensured, the global map can be updated in time, and the repeated updating of the static region can be avoided.

Step S143: at least one updated region in the global map is updated according to at least one updated region in the target local map.

A preset unknown probability and an occupancy probability of each of the at least one grid in the at least one updated region saved in the target local map are acquired. For each grid in the at least one updated region, a difference value between the occupancy probability of the current grid and a preset unknown probability is calculated. For example, the occupancy probability of the current grid and the preset unknown probability can be calculated by the following expression:

$$m_a(i,j) = \begin{cases} m_s(i,j), & |m_a(i,j)-\alpha| < \varepsilon \\ m_l(i,j), & \text{others} \end{cases}$$

$m_a(i,j)$ represents the updated map, $m_s(i,j)$ represents the global map, $m_l(i,j)$ represents the local map, $(i,j)$ represents the grid position, $\alpha$ represents the preset unknown probability, such as 0.5 or -1, and $\varepsilon$ represents a specified tolerance value which can be set according to the actual requirement on the map updating precision.

If an absolute value of the difference value corresponding to the current grid is less than the specified tolerance value, it means that the grid status of the current grid is uncertain, and the occupancy status of the current grid can be determined as an unknown status; and if the absolute value of the difference value corresponding to the current grid is greater than or equal to the specified tolerance value, it means that the status of the current grid is known, and the occupancy status of the current grid is determined as a known status.

The occupancy status of each of the at least one grid in the at least one updated region in the target local map is acquired, where the occupancy status includes a known status and an unknown status; each of the at least one grid in the at least one updated region with the occupancy status being the known status is determined as a grid to be updated, and each of the at least one grid in the at least one updated region with the occupancy status being the unknown status is determined as an unchanged grid; at least one grid in the global map corresponding to the at least one grid to be updated is updated by the at least one grid in the local map corresponding to the grid to be updated; and at least one grid in the global map corresponding to at least one unchanged grid is retained unchanged.

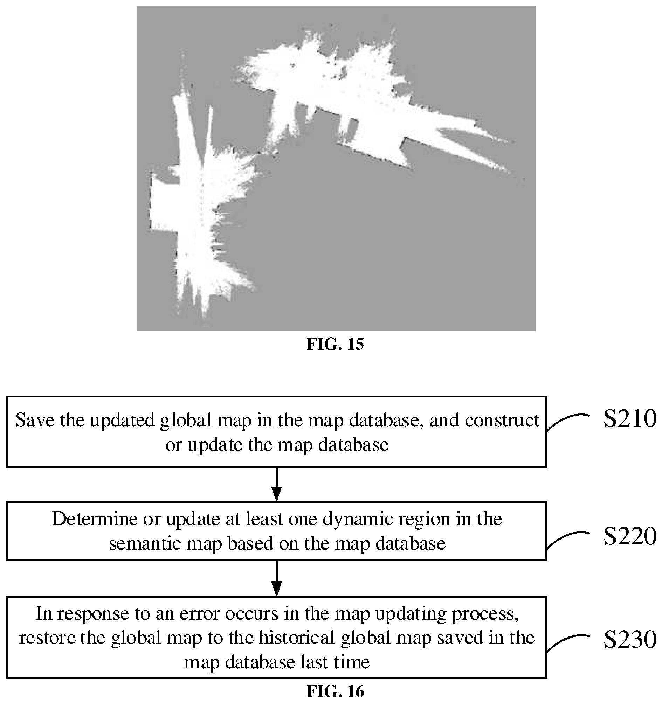

In step S141 to step S143, at least one changed region is determined in combination with the target local map, the global map and the semantic map labeling the at least one static region and the at least one dynamic region in the global map; at least one updated region is determined in the at least one changed region according to a distance saved by the at least one grid in the target local map and the global map; at least one updated region in the global map is updated by the at least one updated region in the target local map; at least one updated region is determined by the semantic map labeling the static and dynamic regions and on the basis of identifying at least one dynamic region many times, so that a dynamic object with a low change cycle can be detected, and a moving object in the global map is effectively filtered out, thereby ensuring the completeness of key features in the global map, avoiding the repeated updating of a static object, preventing ghosts (such as a part circled in FIG. 7) and double images (such as a part circled in FIG. 14) from appearing in the global map, improving the authenticity and consistency of the global map, and effectively relieving the problem of poor map quality caused by long-term global map updating. The global map is locally updated by the at least one updated region in the local map, the updating range is small, and the memory usage is small. In addition, the spatial relationship between the local map and the global map is taken into full consideration. Even if local updating is wrong, the obvious deviation of a partial region in the global map (two white regions shown in FIG. 15 are a region before deviation and a region after deviation) will not be generated, so that the consistency, reliability and accuracy of the updated global map can be ensured.

According to the map updating method provided by the embodiments of the present application, the local map can be periodically constructed according to the pose of the autonomous mobile apparatus and the sensor data to limit the coverage range of the local map, the local map is aligned to obtain the target local map aligned with the global map, and the global map is updated according to the global map, the semantic map and the target local map, so that the global map can be updated on a small scale at each time, large-scale global updating of the global map can be avoided, the quality of the global map can be improved, and the map updating efficiency and accuracy can be improved. In addition, at least one updated region is determined by the semantic map labeling the static and dynamic regions and on the basis of identifying the dynamic region many times, so that a dynamic object with a low change cycle can be detected, and a moving object in the global map is effectively filtered out, thereby ensuring the completeness of key features in the global map, avoiding the repeated updating of a static object, preventing ghosts and double images from appearing in the global map, improving the authenticity and consistency of the global map, and effectively relieving the problem of poor map quality caused by long-term global map updating. The local map is locally updated by the at least one updated region in the target local map, the updating range is small, and the memory usage is small. In addition, the spatial relationship between the local map and the global map is taken into full consideration. Even if local updating is wrong, the obvious deviation of a partial region in the global map will not be generated, so that the consistency, reliability and accuracy of the updated global map can be ensured.

In some embodiments, referring to FIG. 16, after step S140, the map updating method may further include step S210 to step S230 of managing the updated global map.

Step S210: the updated global map is saved in the map database, and the map database is constructed or updated.

Step S220: at least one dynamic region in the semantic map is determined or updated based on the map database.

Based on step S220, the semantic map can be maintained in real time according to the updated map so as to assist the map alignment process and the map updating process. The specific description of step S220 may be referenced to the relevant part of the map database analysis method.

Step S230: in response to an error occurs in the map updating process, the global map is restored to the historical global map saved in the map database last time.

Errors in the map updating process refer to obvious errors rather than minor errors. For example, the obvious errors may include, but are not limited to, the situation that the map matching degree mentioned above is low and the situation that the localization confidence of the autonomous mobile apparatus is obviously reduced.

Based on step S210 to step S230, in case of obvious errors in mapping or localization, the normal process can be restored by map rollback to improve the map updating robustness.

In some embodiments, after step S140, the map updating method may further include a map sharing step, that is, the updated map is shared to other autonomous mobile apparatuses, and the updated map sent by other autonomous mobile apparatuses is acquired, so that the risk of localization failure of a single autonomous mobile apparatus is reduced, and the map updating reliability is improved.

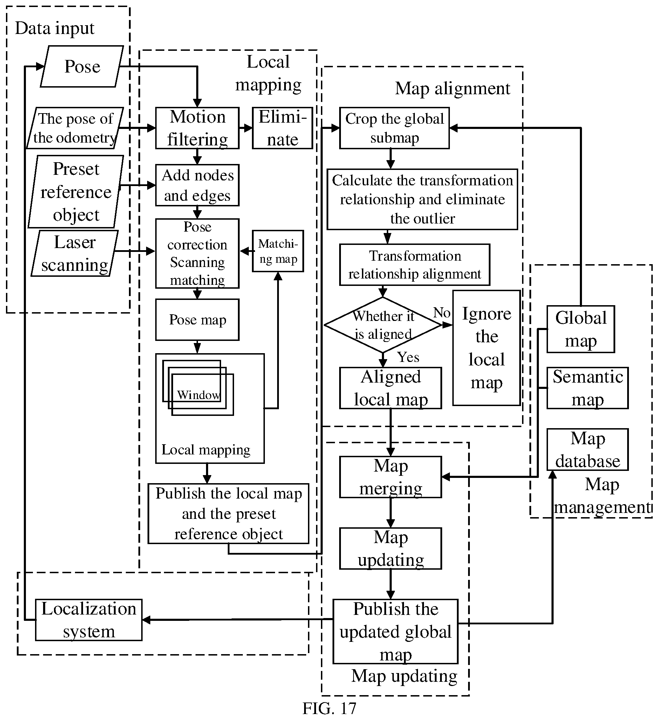

For example, referring to FIG. 17, FIG. 17 is a flowchart of a map updating method according to an exemplary embodiment of the present application. The map updating method includes four parts, that is, local mapping, map alignment, map updating and map management.

Input data of local mapping may include a pose output by a LIDAR odometry, a pose output by a localization system, preset reference object information and laser scanning data. The local mapping part may include: motion filtering is performed according to the pose output by the LIDAR odometry and the pose output by the localization system, and the pose that does not meet the requirement is eliminated; nodes and edges of the pose graph are added according to the pose meeting the requirement and the preset reference object information; the nodes are corrected by a scan matching method according to laser scanning data; when the size of the pose graph reaches a certain size, a matching map is generated based on the pose graph in each window in the pose graph; node correction is assisted by the matching map; and when the condition of periodically publishing the local map, the matching map constructed base on the pose graph and the preset reference object information are output to a map alignment module.

The map alignment part may include: a global submap is cropped from the global map according to the local map; a transformation relationship between the local map and the global submap is calculated; at least one outlier in the transformation relationship is eliminated, and the transformation relationship with the outlier eliminated is subjected to alignment; whether the local map is aligned with the global map is determined; if yes, a target local map aligned with the global map is output to a map updating module; and if not, the local map is ignored.

The map updating part may include: maps are merged, that is, at least one updated region is determined according to the target local map and the global map; at least one updated region in the global map is updated by the at least one updated region in the target local map; and an updated map is published to a localization system and a map management module.

The map management part includes: a map database is constructed, the global map and the semantic map are stored, and the global map is sent to the map alignment module after a global map acquisition request of the map alignment module is received; the semantic map and the global map are sent to the map updating module after a global map and semantic map acquisition request of the map updating module is received; meanwhile, when an obvious error occurs in the map updating process, it is responsible for rolling back map data to restore the normal process.

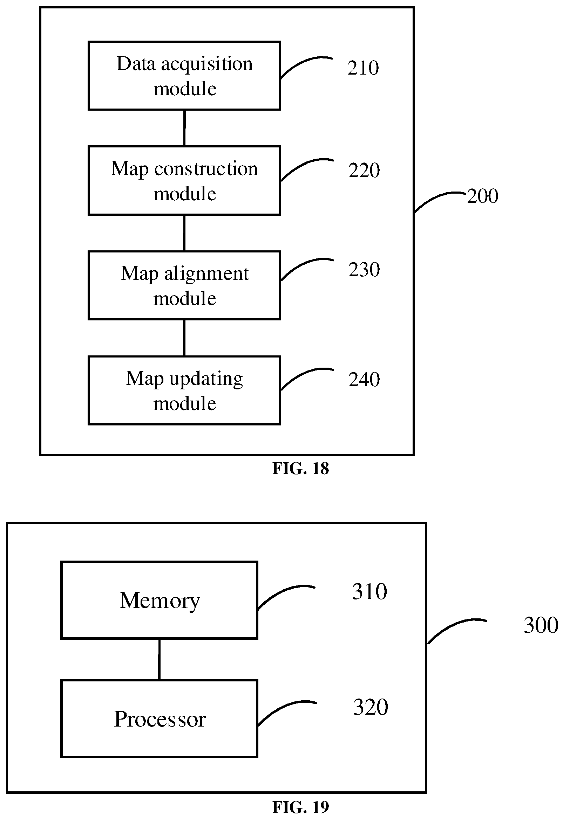

FIG. 18 is a structural block diagram of a map updating apparatus according to an embodiment of the present application. The map updating device 200 may be applied to the autonomous mobile apparatus. The map updating apparatus 200 includes a data acquisition module 210, a map construction module 220, a map alignment module 230 and a map updating module 240.

The data acquisition module 210 is configured to acquire a pre-constructed global map, a semantic map, a pose of an autonomous mobile apparatus, and sensor data, where at least one static region and at least one dynamic region in the global map are labeled in the semantic map. The specific working process of the data acquisition module 210 is referenced to step S110 and is not described herein again.

The map construction module 220 is configured to periodically construct a local map according to the pose and the sensor data in order to limit the coverage range of the local map. The specific working process of the map construction module 220 is referenced to step S120 and is not described herein again.

The map alignment module 230 is configured to align the global map with the local map to obtain a target local map aligned with the global map. The specific working process of the map alignment module 230 is referenced to step S130 and is not described herein again.

The map updating module 240 is configured to update the global map according to the global map, the semantic map and the target local map. The specific working process of the map updating module 240 is referenced to step S140 and is not described herein again.

In some embodiments, the map updating apparatus 200 further includes a map management module. The map management module is configured to: after the global map is updated, save the updated global map in the map database to construct or update the map database; determine or update at least one dynamic region in the semantic map based on the map database; and when an error occurs in the map updating process, restore the global map to the historical global map saved in the map database last time. The specific working process of the map management module is referenced to step S210 to step S230 and is not described herein again.

It can be clearly understood by those skilled in the art that the map updating apparatus provided by the embodiments of the present application can implement the map updating method provided by the embodiments of the present application. The specific working processes of the above apparatus and modules may be referenced to the process corresponding to the method in the embodiments of the present application, and are not described herein again.

In the embodiments provided by the present application, the mutual coupling, direct coupling or communication connection of the displayed or discussed modules may be indirect coupling or communication coupling through some interface, apparatuses or modules, or may be electrical, mechanical or other forms, which will not be specifically limited by the embodiments of the present application.

In addition, various functional modules in the embodiments of the present application may be integrated into one processing module, or each module may exist separately and physically, or two or more modules may be integrated into one module. The integrated modules may be implemented in the form of hardware and may also be implemented in the form of a software function module.

FIG. 19 is a structural block diagram of an autonomous mobile apparatus according to another embodiment of the present application. The autonomous mobile apparatus 300 may include a memory 310 and a processor 320, an application program is stored in the memory 310, and the application program is configured to perform the method provided by the embodiments of the present application when being called by the processor 320.

The processor 320 may include one or more processing cores. The processor 320 uses various interfaces and lines to connect each part in the whole autonomous mobile apparatus 300, and is configured to run or execute instructions, programs, code sets or instruction sets stored in the memory 310, call, run or execute data stored in the memory 310, and perform various functions of the autonomous mobile apparatus 300 and process data. The processor 320 may be implemented in at least one hardware form of digital signal processing (DSP), a field-programmable gate array (FPGA) and a programmable logic array (PLA). The processor 320 may integrate one or a combination of a central processing unit (CPU), a graphics processing unit (GPU) and a modem. The CPU mainly processes an operating system, a user interface, an application program and the like; the GPU is configured to render and draw the displayed content; and the modem is configured to process wireless communication. It may be understood that the modem may not be integrated into the processor 320, and is implemented separately by a communication chip.

The memory 310 may include a random access memory (RAM), or may include a read-only memory (ROM). The memory 310 may be configured to store instructions, programs, codes, code sets, or instruction sets. The memory 310 may include a program storage area and a data storage area. The program storage area may store an instruction for implementing the operating system, an instruction for achieving at least one function and an instruction for implementing each method embodiment described above. The data storage area may store data created by the autonomous mobile apparatus 300 during use.

The embodiments of the present application further provide a computer-readable storage medium. The computer-readable storage medium stores program codes, and the program codes are configured to perform the method provided by the embodiments of the present application when being called by a processor. The computer-readable storage medium may be an electronic memory such as a flash memory, an electrically-erasable programmable read-only memory (EEPROM), an erasable programmable read-only memory (EPROM), a hard disk or an ROM. In some embodiments, the computer-readable storage medium includes a non-transitory computer-readable storage medium (Non-TCRSM). The computer-readable storage medium has a storage space for the program codes for performing any method steps of the above method. These program codes may be read from or written into one or more computer program products. The program codes may be compressed in an appropriate form.

Finally, it should be noted that the foregoing embodiments are merely intended for describing the technical solutions of the present application, but not for limiting the present application. Although the present application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present application.

**Claims**

1. A map updating method, comprising:

    acquiring a pre-constructed global map, a semantic map, a pose of an autonomous mobile apparatus, and a sensor data, wherein at least one static region and at least one dynamic region in the global map are labeled in the semantic map;
    periodically constructing a local map according to the pose and the sensor data in order to limit a coverage range of the local map;
    aligning the global map with the local map to obtain a target local map aligned with the global map; and
    updating the global map according to the global map, the semantic map, and the target local map.

2. The method according to claim 1, wherein the step of periodically constructing the local map according to the pose and the sensor data comprises:

    constructing a pose graph in a real time according to acquired pose and sensor data upon acquiring one pose and one frame of sensor data;
    globally optimizing the pose graph upon meeting a preset condition of periodically publishing the local map to obtain a globally optimized pose graph; and
constructing the local map according to the globally optimized pose graph.

3. The method according to claim 2, wherein the step of constructing the pose graph in the real time according to the acquired pose and sensor data comprises:

    constructing the pose graph in the real time according to the pose and the sensor data, the pose graph comprising at least one window; and
    optimizing nodes in a current window for each window in the pose graph in response to a quantity of nodes comprised by the current window reaches a first preset quantity to obtain optimized nodes and form a locally optimized pose graph.

4. The method according to claim 3, wherein the sensor data comprises a laser scanning data, and after the step of optimizing the nodes in the current window for each window in the pose graph in response to the quantity of nodes comprised by the current window reaches the first preset quantity to obtain the optimized nodes and form the locally optimized pose graph, the method further comprises:

    acquiring a laser scanning data corresponding to the optimized nodes from the sensor data;
    generating a matching map corresponding to the current window according to the laser scanning data corresponding to the optimized nodes; and
    correcting nodes in a next window by the matching map corresponding to the current window.

5. The method according to claim 4, wherein the step of correcting the nodes in the next window by the matching map corresponding to the current window comprises:

    for each node in the next window, acquiring a plurality of candidate points corresponding to a current node according to a pose sampling interval;
    for each candidate point of the plurality of candidate points, calculating a matching value of each candidate point according to following ways:

        acquiring a laser scanning data corresponding to a current candidate point from the sensor data;
        determining a grid hit by the laser scanning data corresponding to the current candidate point in the matching map as a target grid;
        calculating a probability of the target grid hit by the laser scanning data corresponding to the current candidate point as a first occupancy probability;

acquiring an occupancy probability saved in the target grid in the matching map as a second occupancy probability, and the occupancy probability saved in each grid in the matching map being calculated according to the laser scanning data corresponding to the optimized node;

calculating a difference value between the first occupancy probability and the second occupancy probability as a matching value of the current candidate point and the matching map; and

selecting a candidate point with a highest matching value from the plurality of candidate points to correct the current node.

6. The method according to any one of claims 3 to 5, wherein the step of constructing a pose graph in the real time according to the pose and the sensor data comprises:

for each pose and each frame of sensor data, detecting whether a current pose meets a preset condition, and detecting whether a current sensor data comprises a preset reference object information;

if the current pose meets the preset condition, adding the current pose as a node into the pose graph; if the current sensor data comprises the preset reference object information, adding a preset reference object pose as a node into the pose graph; and

acquiring at least one constraint relationship corresponding to nodes in the pose graph, and constructing at least one edge of the pose graph according to the at least one constraint relationship.

7. The method according to claim 6, wherein the step of detecting whether the current pose meets the preset condition comprises:

acquiring a pose at a previous moment; calculating a distance difference and an angle difference between the current pose and the pose at the previous moment; and

if the distance difference is greater than a preset distance or the angle difference is greater than a preset angle difference, determining that the current pose meets the preset condition.

8. The method according to any one of claims 2 to 7, wherein after the step of constructing the local map according to the globally optimized pose graph, the method further comprises:

deleting a specified quantity of partial nodes in the pose graph one by one according to a time sequence of nodes added into the pose graph, in order to control a size of the pose graph and a size of a local map constructed in a next round.

9. The method according to any one of claims 2 to 8, wherein the preset condition of periodically publishing the local map comprises:

a quantity of nodes in the pose graph reaches a second preset quantity; or

a moving distance of the autonomous mobile apparatus reaches a preset distance; or

a duration from a time of constructing the pose graph to a current moment reaches a preset duration.

10. The method according to any one of claims 1 to 9, wherein the step of aligning the global map with the local map to obtain the local map aligned with the global map comprises:

determining a global submap in the global map, a center of the global submap coinciding with a center of the local map, and a size of the global submap being same as a size of the local map;

extracting an ORB feature of the local map as a first feature, and extracting an ORB feature of the global submap as a second feature; and

aligning the global map with the local map according to the first feature and the second feature to obtain the local map aligned with the global map.

11. The method according to claim 10, wherein the step of aligning the global map with the local map according to the first feature and the second feature to obtain the local map aligned with the global map comprises:

acquiring image coordinates of the first feature in the local map to obtain a first point cloud corresponding to the first feature, and acquiring image coordinates of the second feature in the global submap to obtain a second point cloud corresponding to the second feature;

determining an initial map alignment value according to the first feature, the first point cloud, the second feature, and the second point cloud; and

aligning the global map with the local map according to the initial map alignment value and by a point cloud alignment algorithm to obtain the local map aligned with the global map.

12. The method according to claim 11, wherein the step of determining the initial map alignment value according to the first feature, the first point cloud, the second feature, and the second point cloud comprises:

performing feature matching on the first feature and the second feature to obtain an initial corresponding relationship between the first feature and the second feature;

eliminating at least one outlier in the initial corresponding relationship by an algorithm for eliminating discrete points, and calculating a transformation relationship between the first point cloud and the second point cloud to obtain at least one correct corresponding relationship between the first feature and the second feature and a transformation relationship between the first point cloud and the second point cloud;

if a quantity of the at least one correct corresponding relationship is greater than a preset quantity, determining the transformation relationship between the first point cloud and the second point cloud as the initial map alignment value; and

if a quantity of the at least one correct corresponding relationship is less than or equal to the preset quantity, determining the local map as the initial map alignment value.

13. The method according to claim 11 or 12, wherein the step of aligning the global map with the local map according to the initial map alignment value and by the point cloud alignment algorithm to obtain the local map aligned with the global map comprises:

performing an alignment on the initial map alignment value by the point cloud alignment algorithm to obtain an alignment result and a residual;

if the residual is less than a preset residual, determining that the alignment is successful; and

Performing a coordinate transformation on the local map based on the alignment result to obtain the local map aligned with the global map.

14. The method according to any one of claims 1 to 13, wherein the step of updating the global map according to the global map, the semantic map, and the target local map comprises:

determining at least one changed region according to the target local map, the global map and the semantic map;

determining at least one updated region in the at least one changed region according to distances of at least one grid in the at least one changed region respectively in the target local map and the global map; and

updating at least one updated region in the global map according to at least one updated region in the target local map.

15. The method according to claim 14, wherein the step of determining the at least one updated region in the at least one changed region according to the distances of the at least one grid in the at least one changed region respectively in the target local map and the global map comprises:

acquiring a distance from each of the at least one grid in the changed region in the target local map to a closest obstacle to obtain a first distance of each of the at least one grid in the at least one changed region;

acquiring a distance from each of the at least one grid in the changed region in the global map to a closest obstacle to obtain a second distance of each of the at least one grid in the at least one changed region; and

determining the at least one updated region in the at least one changed region according to the first distance and the second distance of each of the at least one grid in the at least one changed region.

16. The method according to claim 15, wherein the step of determining the at least one updated region in the at least one changed region according to the first distance and the second distance of each of the at least one grid in the at least one changed region comprises:

for each grid in the at least one changed region, calculating a likelihood value of a current grid changing according to a first distance and a second distance corresponding to the current grid; and

determining at least one region corresponding to at least one grid in the at least one changed region with a likelihood value greater than a specified likelihood value as the at least one updated region.

17. The method according to any one of claims 14 to 16, wherein the step of determining the at least one changed region according to the target local map, the global map, and the semantic map comprises:

calculating at least one intersection of the target local map and the global map as an overlap region of the target local map and the global map; and

determining the at least one changed region according to at least one grid in the overlap region and the semantic map.

18. The method according to claim 17, wherein the step of determining the at least one changed region according to the at least one grid in the overlap region and the semantic map comprises:

    detecting whether at least one grid in the overlap region is in the at least one static region or the at least one dynamic region labeled in the semantic map; and

    if detecting that the at least one grid in the overlap region is in the dynamic region labeled in the semantic map, and determining the at least one grid in the overlap region in the dynamic region labeled in the semantic map as the at least one changed region.

19. The method according to any one of claims 14 to 18, wherein the step of updating the at least one updated region in the global map according to the at least one updated region in the target local map comprises:

    acquiring an occupancy status of each of at least one grid in the at least one updated region in the target local map, and the occupancy status comprising a known status and an unknown status;

    determining each of at least one grid in the at least one updated region with the occupancy status being the known status as a grid to be updated, and determining each of at least one grid in the at least one updated region with the occupancy status being the unknown status as an unchanged grid;

    updating at least one grid in the global map corresponding to at least one grid to be updated by using at least one grid in the target local map corresponding to the at least one grid to be updated; and

    remaining at least one grid in the global map corresponding to at least one unchanged grid unchanged.

20. The method according to claim 19, wherein each grid in the target local map also saves an occupancy probability corresponding to the grid, and before the step of acquiring the occupancy status of each of the at least one grid in the at least one updated region in the target local map further comprises:

    acquiring a preset unknown probability and an occupancy probability of each of the at least one grid in the at least one updated region saved in the target local map; and

    for each grid in the at least one updated region, calculating a difference value between an occupancy probability of a current grid and the preset unknown probability, determining an occupancy status of the current grid as the unknown status if an absolute value of the difference value corresponding to the current grid is less than a specified tolerance value, and determining an occupancy status of the current grid as the known status if an absolute value of the difference value corresponding to the current grid is greater than or equal to the specified tolerance value.

21. The method according to any one of claims 1 to 20, wherein after the step of acquiring the pre-constructed global map and after the step of acquiring the semantic map, the method further comprises:

    determining at least two initial dynamic regions from the global map by at least two dynamic region determining methods, each dynamic region determining method corresponding to one initial dynamic region;

    calculating at least one intersection of the at least two initial dynamic regions as at least one dynamic region; and

    constructing the semantic map according to the at least one dynamic region.

22. The method according to claim 21, wherein one of the at least two dynamic region determining methods comprises:

    outputting the global map; and

    acquiring the initial dynamic regions manually labeled for the global map.

23. The method according to claim 21 or 22, wherein one of the at least two dynamic region determining methods further comprises:

    outputting the global map;

    acquiring a manually processed global map, and at least one stable and unchanged obstacle being labeled in the manually processed global map; and

    determining a region in the global map except the at least one stable and unchanged obstacle as the initial dynamic region.

24. The method according to any one of claims 21 to 23, wherein one of the at least two dynamic region determining methods further comprises:

    acquiring a plurality of historical global maps from a map database;

    for a same grid in the plurality of historical global maps, generating a change curve of the grid and calculating a curvature of the change curve; and

    determining a region corresponding to a grid with the curvature greater than a specified curvature as the initial dynamic region.

**25.** The method according to any one of claims 21 to 24, wherein one of the at least two dynamic region determining methods further comprises:

calculating a likelihood value of a same grid in the local map and the global map by a likelihood algorithm; and
determining a region corresponding to a grid with a likelihood value greater than a specified likelihood value as the initial dynamic region.

**26.** The method according to any one of claims 1 to 25,wherein after the step of updating the global map according to the global map, the semantic map, and the target local map, the method further comprises:

saving an updated global map in the map database to construct or update a map database;
determining or updating the at least one dynamic region in the semantic map based on the map database; and
in response to an error occurs in a map updating process, restoring the global map to a historical global map saved in the map database last time.

**27.** A map updating apparatus, comprising:

a data acquisition module configured to acquire a pre-constructed global map, a semantic map, a pose of an autonomous mobile apparatus, and a sensor data, wherein at least one static region and at least one dynamic region in the global map are labeled in the semantic map;
a map construction module configured to periodically construct a local map according to the pose and the sensor data in order to limit a coverage range of the local map;
a map alignment module configured to align the global map with the local map to obtain a target local map aligned with the global map; and
a map updating module configured to update the global map according to the global map, the semantic map, and the target local map.

**28.** An autonomous mobile apparatus, comprising: a memory and a processor, wherein an application program is stored in the memory, and the application program is configured to implement the method according to any one of claims 1 to 26 when being called by the processor.

**29.** A computer-readable storage medium, wherein the computer-readable storage medium stores program codes, and the program codes are configured to implement the method according to any one of claims 1 to 26 when being called by a processor.

**FIG. 1**

EP 4 775 930 A1

Global map

Global map

Map alignment
module
110

Aligned local map

Map updating
module
130

Laser scanning data

Data output by the inertial
measurement unit

Data output by the wheel
odometry

Local map

Local mapping
module
120

Updated global
map

Map management
module
140

The pose of an autonomous
mobile apparatus

Updated global
map

Localization system

**FIG. 2**

| Acquire a pre-constructed global map, a semantic map, a pose of the autonomous mobile apparatus, and sensor data, where at least one static region and at least one dynamic region in the global map are labeled in the semantic map | S110 |
|---|---|

| Periodically construct a local map according to the pose of the autonomous mobile apparatus and the sensor data so as to limit the coverage range of the local map | S120 |
|---|---|

| Align the global map with the local map to obtain a target local map aligned with the global map | S130 |
|---|---|

| Update the global map according to the global map, the semantic map and the target local map | S140 |
|---|---|

**FIG. 3**

Dynamic region

**FIG. 4**

| | |
|---|---|
| Construct a pose graph in real time according to the acquired pose and sensor data upon acquiring one pose and one frame of sensor data | S121 |
| ↓ | |
| Globally optimize the pose graph upon meeting a preset condition of periodically publishing the local map to obtain a globally optimized pose graph | S122 |
| ↓ | |
| Construct the local map according to the globally optimized pose | S123 |

**FIG. 5**

**FIG. 6**

**FIG. 7**

a

b

c

Scanning matching

Scanning matching

Preset reference object

A

B

C

d

**FIG. 8**

a

Preset reference object

t1

**FIG. 9**

a

b

Scanning
matching

1 2 3 4 5 6 7 8 9 10

A B

Preset reference
object

t2

**FIG. 10**

a

b

c

Scanning
matching

Scanning
matching

1 2 3 4 5 6 7 8 9 10 11 12 13 14 15

A B C

Preset
reference
object

t3

**FIG. 11**

Laser scanning data
Pose
Preset reference object

FIG. 12

Determine at least one changed region according to the target local map, the global map and the semantic map | S141

Determine at least one updated region in the at least one changed region according to distances of the at least one grid in the at least one changed region respectively in the target local map and the global map | S142

Update at least one updated region in the global map according to at least one updated region in the target local map | S143

**FIG. 13**

**FIG. 14**

**FIG. 15**

Save the updated global map in the map database, and construct or update the map database — S210

Determine or update at least one dynamic region in the semantic map based on the map database — S220

In response to an error occurs in the map updating process, restore the global map to the historical global map saved in the map database last time — S230

**FIG. 16**

**Data input**

Pose

The pose of the odometry

Preset reference object

Laser scanning

**Local mapping**

Motion filtering → Eliminate

Add nodes and edges

Pose correction Scanning matching ← Matching map

Pose map

Window

Local mapping

Publish the local map and the preset reference object

**Map alignment**

Crop the global submap

Calculate the transformation relationship and eliminate the outlier

Transformation relationship alignment

Whether it is aligned — No → Ignore the local map

Yes

Aligned local map

Global map

Semantic map

Map database

**Map management**

Map merging

Map updating

Publish the updated global map

**Map updating**

Localization system

FIG. 17

FIG. 18

FIG. 19

## INTERNATIONAL SEARCH REPORT

| International application No. |
| --- |
| **PCT/CN2023/117743** |

### A. CLASSIFICATION OF SUBJECT MATTER

G01C21/32(2006.01)i; G01S17/89(2020.01)n

According to International Patent Classification (IPC) or to both national classification and IPC

### B. FIELDS SEARCHED

Minimum documentation searched (classification system followed by classification symbols)

IPC:G01C,G01S,G05D,G08G

Documentation searched other than minimum documentation to the extent that such documents are included in the fields searched

Electronic data base consulted during the international search (name of data base and, where practicable, search terms used)

CNTXT, ENTXTC, ENTXT, VEN, IEEE, CNKI, 读秀, DUXIU, 百度, BAIDU: 地图, 更新, 静态, 动态, 区域, 全局, 局部, 部分, 位姿, 位置, 姿态, 激光, 点云, 栅格, 占据, map, update, updating, static, dynamic, areas, local, global, semantic, pose, position, location, laser, point cloud, grid, occupation

### C. DOCUMENTS CONSIDERED TO BE RELEVANT

| Category* | Citation of document, with indication, where appropriate, of the relevant passages | Relevant to claim No. |
| --- | --- | --- |
| X | CN 115984504 A (SHANGHAI SEER INTELLIGENT TECHNOLOGY CORP.) 18 April 2023 (2023-04-18) description, paragraphs 20-50, and figures 1-6 | 1-2, 6-29 |
| Y | CN 115984504 A (SHANGHAI SEER INTELLIGENT TECHNOLOGY CORP.) 18 April 2023 (2023-04-18) description, paragraphs 20-50, and figures 1-6 | 3-4 |
| Y | CN 113447026 A (SHENZHEN YIJIAHE TECHNOLOGY RESEARCH AND DEVELOPMENT CO., LTD.) 28 September 2021 (2021-09-28) description, paragraphs 54 and 81 | 3-4 |
| X | CN 115979248 A (SHANGHAI SEER INTELLIGENT TECHNOLOGY CORP.) 18 April 2023 (2023-04-18) description, paragraphs 51-99, and figures 1-6 | 1-2, 6-29 |
| Y | CN 115979248 A (SHANGHAI SEER INTELLIGENT TECHNOLOGY CORP.) 18 April 2023 (2023-04-18) description, paragraphs 51-99, and figures 1-6 | 3-4 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 April 2024** | **23 May 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/117743** |

### C.   DOCUMENTS CONSIDERED TO BE RELEVANT

| Category* | Citation of document, with indication, where appropriate, of the relevant passages | Relevant to claim No. |
| --- | --- | --- |
| A | CN 113932790 A (BEIJING MEGVII TECHNOLOGY CO., LTD.) 14 January 2022 (2022-01-14)<br>    entire document | 1-29 |
| A | CN 116299429 A (SANY HEAVY MACHINERY CO., LTD.) 23 June 2023 (2023-06-23)<br>    entire document | 1-29 |
| A | CN 112348029 A (HOLOMATIC TECHNOLOGY (BEIJING) CO., LTD.) 09 February 2021 (2021-02-09)<br>    entire document | 1-29 |
| A | CN 111797688 A (WUHAN UNIVERSITY) 20 October 2020 (2020-10-20)<br>    entire document | 1-29 |
| A | CN 116644073 A (GUANGZHOU WERIDE TECHNOLOGY CO., LTD.) 25 August 2023 (2023-08-25)<br>    entire document | 1-29 |
| A | CN 112380312 A (CHONGQING ZHIXINGZHE INFORMATION TECHNOLOGY CO., LTD.) 19 February 2021 (2021-02-19)<br>    entire document | 1-29 |
| A | CN 114064680 A (SUN YAT-SEN UNIVERSITY) 18 February 2022 (2022-02-18)<br>    entire document | 1-29 |
| A | CN 114219905 A (UBTECH ROBOTICS CORP.) 22 March 2022 (2022-03-22)<br>    entire document | 1-29 |
| A | EP 3761137 A1 (FUJITSU LTD.) 06 January 2021 (2021-01-06)<br>    entire document | 1-29 |
| A | KIM, Chansoo et al. "Updating Point Cloud Layer of High Definition (HD) Map Based on Crowd-Sourcing of Multiple Vehicles Installed LiDAR"<br>*IEEE Access,* Vol. 9, 06 January 2021 (2021-01-06), 8028-8046<br>ISSN: 2169-3536,<br>    entire document | 1-29 |
| A | 黄山 等 (HUANG, Shan et al.). "一种室内高动态环境的机器人定位方法 (A Robot Localization Method in Indoor Dynamic Environment)"<br>*电子科技大学学报 (Journal of University of Electronic Science and Technology of China),* Vol. 50, No. 3, 31 May 2021 (2021-05-31), 382-390<br>ISSN: 1001-0548,<br>    entire document | 1-29 |

Form PCT/ISA/210 (second sheet) (July 2022)

**INTERNATIONAL SEARCH REPORT**
Information on patent family members

International application No.

**PCT/CN2023/117743**

| Patent document cited in search report | | | Publication date (day/month/year) | Patent family member(s) | | | Publication date (day/month/year) |
|---|---|---|---|---|---|---|---|
| CN | 115984504 | A | 18 April 2023 | CN | 115984504 | B | 04 July 2023 |
| CN | 113447026 | A | 28 September 2021 | None | | | |
| CN | 115979248 | A | 18 April 2023 | CN | 115979248 | B | 18 August 2023 |
| CN | 113932790 | A | 14 January 2022 | None | | | |
| CN | 116299429 | A | 23 June 2023 | None | | | |
| CN | 112348029 | A | 09 February 2021 | CN | 112348029 | B | 10 August 2021 |
| CN | 111797688 | A | 20 October 2020 | None | | | |
| CN | 116644073 | A | 25 August 2023 | None | | | |
| CN | 112380312 | A | 19 February 2021 | CN | 112380312 | B | 05 August 2022 |
| CN | 114064680 | A | 18 February 2022 | None | | | |
| CN | 114219905 | A | 22 March 2022 | None | | | |
| EP | 3761137 | A1 | 06 January 2021 | JP | 2021009682 | A | 28 January 2021 |
| | | | | EP | 3761137 | B1 | 04 August 2021 |

Form PCT/ISA/210 (patent family annex) (July 2022)